# EUROPEAN PATENT APPLICATION

(11) **EP 1 806 435 A2**
(43) Date of publication of application: **11.07.2007**
(21) Application number: 07100049.1
(22) Date of filing: 03.01.2007
(51) Int. Cl.: C23C 28/04, F01D 5/28

(54) **Layered thermal barrier coatings containing lanthanide series oxides for improved resistance to CMAS degradation**

(30) Priority: 06.01.2006 US 327091
(71) Applicant: General Electric Company, Schenectady, NY 12345 (US)
(72) Inventor: Darolia, Ramgopal, West Chester, OH 45069 (US); Nagaraj, Bangalore Aswatha, West Chester, OH 45069 (US); Konitzer, Douglas G., West Chester, OH 45069 (US); Gorman, Mark Daniel, West Chester, OH 45069 (US); Fu, Ming, Hamilton, OH 45011 (US)
(74) Representative: Bedford, Grant Richard

(57) **Abstract**

A coating applied as a two layer system. The outer layer (22) is an oxide of a group IV metal selected from the group consisting of zirconium oxide, hafnium oxide and combinations thereof, which are doped with an effective amount of a lanthanum series oxide. These metal oxides doped with a lanthanum series addition comprises a high weight percentage of the outer coating (22). When the zirconium oxide is doped with an effective amount of a lanthanum series oxide, a dense reaction layer is formed at the interface of the outer layer of TBC and the CMAS. This dense reaction layer prevents CMAS infiltration below it. The second layer, or inner layer (20) underlying the outer layer (22), comprises a layer of partially stabilized zirconium oxide.

## Description

The present invention is directed generally to a multilayer coating for hot section turbine components, and more specifically for a coating that includes rare earth elements.

Calcium-magnesium-aluminum-silicate (CMAS) infiltration is a phenomenon that is linked to thermal barrier coating (TBC) spallation in hot section turbine components.

Thermal barrier coatings are utilized on hot section engine components including combustor section and turbine section components to protect the underlying base materials from high temperatures as a result of the flow of hot gases of combustion through the turbine. These hot gases of combustion can be above the melting point of the base materials, which typically are superalloy materials, being based on iron, nickel, cobalt and combinations thereof. Of course, the thermal barrier coatings provide passive protection from overheating, and are used in conjunction with cooling airflow that provides active cooling protection.

Under service conditions, these thermal barrier-coated hot section engine components can be susceptible to various modes of damage, including erosion, oxidation and corrosion from exposure to the gaseous products of combustion, foreign object damage and attack from environmental contaminants. The source of the environmental contaminants is ambient air, which is drawn in by the engine for cooling and for combustion. The type of environmental contaminants in ambient air will vary from location to location, but can be of a concern to aircraft as their purpose is to move from location to location. Environmental contaminants that can be present in the air include sand, dirt, volcanic ash, sulfur in the form of sulfur dioxide, fly ash, particles of cement, runway dust, and other pollutants that may be expelled into the atmosphere, such as metallic particulates, such as magnesium, calcium, aluminum, silicon, chromium, nickel, iron, barium, titanium, alkali metals and compounds thereof, including oxides, carbonates, phosphates, salts and mixtures thereof. These environmental contaminants are in addition to the corrosive and oxidative contaminants that result from the combustion of fuel. However, all of these contaminants can adhere to the surfaces of the hot section components, which are typically thermal barrier coated.

At the operating temperature of the engine, these contaminants can form contaminant compositions on the thermal barrier coatings. These contaminant compositions typically include calcium, magnesium, alumina, silica (CMAS), and their deposits are referred to as CMAS. At temperatures above about 2240°F, these CMAS compositions may become liquid and infiltrate into the TBC. This infiltration by the liquid CMAS destroys the compliance of the TBC and leads to premature spallation of the TBC.

The spallation due to CMAS infiltration has become a greater problem in jet engines as their operating temperatures have increased to improve efficiency, as well as in engines operating in the Middle East and in coastal regions. High concentrations of fine sand and dust in the ambient air can accelerate CMAS degradation. A typical composition of CMAS is, for example, 35 mole% CaO, 10 mol% MgO, 7 mol% Al₂O₃, 48 mol% SiO₂, 3 mol% Fe₂O₃ and 1.5 mol% NiO. And of course, spallation of the TBC due to exposure to CMAS at elevated temperature only sets the stage for more serious problems. Continued operation of the engine once the passive thermal barrier protection has been lost leads to oxidation of the base metal superalloy protective coating and the ultimate failure of the component by burn through cracking. In fact, such significant distress has been observed in both military and commercial engines.

Various solutions to the problem of CMAS degradation have been attempted. However, as operating temperatures of engines have gradually trended higher, ever more effective treatments are required. One early solution, identified in U.S. Patent No. 6,261,643 issued July 17, 2001, and assigned to the assignee of the present invention, identifies the use of an impermeable barrier or a sacrificial oxide coating applied over the TBC. One of these barrier oxide coatings is identified as alumina particles in a silica matrix, as set forth in U.S. Patent No. 6,465,090 issued October 15, 2002, and assigned to the assignee of the present invention. This can be effective until these thin barrier layers are worn off or sacrificially consumed.

Other solutions have been set forth in U.S. Patent No. 6,893,750 issued May 17, 2005, (the '750 patent) and U.S. Patent No. 6,933,066 issued August 23, 2005, (the '066 patent), both assigned to the assignee of the present invention. Both the '750 patent and the '066 patent disclose the use of a ceramic thermal barrier coating material applied directly to a bond coat overlying the metal substrate. The '750 patent further discloses an alumina-zirconia layer overlying the ceramic TBC, whereas the '066 patent utilizes a tantalum oxide layer overlying the ceramic TBC. Suitable ceramic TBC materials are identified as various zirconias, in particular chemically stabilized zirconias (i.e., various metal oxides such as zirconium oxide blended with yttrium oxide), including yttria-stabilized zirconias, ceria-stabilized zirconias, calciastabilized zirconias, scandia-stabilized zirconias, magnesia-stabilized zirconias, indiastabilized zirconias, ytterbia-stabilized zirconias as well as mixtures of such stabilized zirconias. Suitable yttria-stabilized zirconias are identified as comprising from about 1 to about 20% by weight yttria (based on the combined weight of yttria and zirconia), and more typically from about 3 to about 10% by weight yttria. Yttria-stabilized zirconia having 7% by weight yttria (7YSZ) and 8% by weight yttria (8YSZ) are by far the most commonly used stabilized zirconia. Unless otherwise noted, all compositions are identified in weight percentages. These stabilized zirconias may be further identified as combined with one or more of a second metal (e.g., a lanthanide or actinide) oxide such as dysprosia, erbia, europia, gadolinia, neodymia, praseodymia, urania, and hafnia to further reduce thermal conductivity of the thermal barrier coating. Suitable ceramic TBC materials are also identified as including pyrochlores of general formula A₂B₂O₇ where A is a metal having a valence of 3+ or 2+ (e.g., gadolinium, lanthanum, neodymium, or erbium) and B is a metal having a valence of 4+ or 5+ (e.g., hafnium, titanium, cerium or zirconium) where the sum of the A and B valences is 7. Representative materials of this type include gadolinium-zirconate, lanthanum zirconate, cerium zirconate, lanthanum titanate, yttrium zirconate, lanthanum hafnate, aluminum cerate, cerium hafnate, aluminum hafnate and lanthanum cerate.

The '750 patent and the '066 patent fail to recognize that TBC-coatings that include lanthanum series additions are useful in protecting the substrate from CMAS infiltration. The amounts of the lanthanum series additions are not identified, so it may well be that the descriptions are either prophetic or included low levels of lanthanum series additions below the effective level, such as may be expected if these lanthanum oxide additions were weight percentage partial substitutions for yttria used to stabilize the zirconium oxide up to about 20%. This is further supported by the fact that neither the '750 patent or the '066 patent recognize the advantage of utilizing a ceramic TBC coating that includes an effective amount of a lanthanum series addition in the TBC overlying the bond coat applied over the metallic substrate.

Although the exact mechanism for spalling of TBC's from their substrates is not known, it has been the belief until now that the fracture toughness of the TBC coatings containing high weight percentages of lanthanum series elements is significantly lower than that of the underlying bond coat and base metal superalloy. This difference in fracture toughness was believed to result in fracture and spallation at the interface after a limited number of engine cycles. Thus, the solutions provided by both the 750 patent and the '066 patent are different solutions than that presented by the present invention.

What is needed is a TBC system that is resistant to CMAS penetration at elevated temperatures, but is also resistant to both spallation at elevated temperatures in the absence of CMAS and excessive wear from normal engine operation.

According to one aspect, the present invention provides a thermal barrier coating system that is resistant to attack by CMAS infiltration for use with hot section components, while providing excellent resistance to spallation as a result of engine cycling. The TBC system of the various embodiments of present invention can be tailored to prevent infiltration by the liquid phase of CMAS at temperatures as high as 2800°F. The trend for gas turbine engines is toward higher operating temperatures, so various embodiments of the present invention will also be capable of supporting subsequent improvements in gas turbine engine design.

The coating of various embodiments of the present invention is specifically applied as a two-layer system. The outer layer is an oxide of a group IV metal selected from the group consisting of zirconium oxide, hafnium oxide and combinations thereof, which are doped with an effective amount of a lanthanum series oxide. These metal oxides doped with a lanthanum series addition comprises a high weight percentage of the outer coating. As used herein, lanthanum series means an element selected from the group consisting of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu) and combinations thereof, and lanthanum series oxides are oxides of these elements. When the zirconium oxide is doped with an effective amount of a lanthanum series oxide, a dense reaction layer is formed at the interface of the outer layer of TBC and the CMAS. This dense reaction layer prevents CMAS infiltration below it. The second layer, or inner layer underlying the outer layer, comprises a layer of partially stabilized zirconium oxide. The most well known of these are YSZ, or yttria-stabilized zirconia, where yttria is present in the amount of from about 2%-8% by weight.

Various embodiments of the present invention find use as a component of thermal barrier coating system applied over hot section components of gas turbine engines. Various embodiments of the present invention provide the TBC system with resistance to CMAS infiltration. Since CMAS results from the deposition of environmental contaminants found in the flowpath air, such as sand, dirt, volcanic ash, sulfur in the form of sulfur dioxide, fly ash flow path, particles of cement, runway dust, and other pollutants on hot section components in the presence of very high temperatures, there is no known way to prevent its formation in advanced turbine engines. However the TBC coating system of the present invention prevents the infiltration of the CMAS below an outer layer of a two layer zirconium-based coating, thereby preventing complete spallation of the TBC from the hot section components. The outer layer, zirconium-based oxide material, a hafnium-based oxide material and combinations thereof, doped with an effective amount of a lanthanum series based oxide, wherein the lanthanum series based oxides are selected from oxides of the group consisting of La, Ce, Pr, Nd, Pm, Sm, Eu, Gd, Tb, Dy, Ho, Er, Tm, Yb, Lu and combinations thereof. The outer layer interacts with the liquid CMAS to form a dense layer preventing further infiltration of the CMAS. Small amounts of these lanthanum series based oxides will not interact sufficiently to form the requisite dense layer. An effective amount will form the dense layer preventing further infiltration of the CMAS into the TBC. In addition, the effective amount will vary, depending upon which lanthanum series oxide or combination of oxides is selected.

The inner layer of the zirconium-based coating is a stabilized zirconia layer, such as 7YSZ, as is well known in the art. This layer is not susceptible to attack from CMAS as it is protected by the outer layer. Thus, the expense associated with applying a complex inner layer can be eliminated. The inner layer also acts as a compliant layer underneath the outer layer and over a metallic bond coat. The inner layer also serves to reduce spalling of the zirconium-based coating, which otherwise occurs when an outer layer composition is applied directly to a bond coat. In addition to 7YSZ, suitable compositions for the inner layer are disclosed in U.S. Patent No. 6,887,585 issued on May 3, 2005, to Darolia et al. entitled "Thermal Barrier Coatings Having Lower Layer for Improved Adherence to Bond Coat" and assigned to the assignee of the present invention and in U.S. Patent No. 6,858,334 issued on February 22, 2005, to Gorman et al. entitled "Ceramic Compositions for Low Conductivity Thermal Barrier Coatings," assigned to the assignee of the present invention, both of which are incorporated herein by reference.

In particular applications or areas of a component, the operating temperature may not be high enough to melt or cause the CMAS to adhere to the surface. In this situation, the CMAS is erosive to the TBC. TBC with effective additions of lanthanum series oxides are known to have poor erosion resistance compared to 7YSZ. Therefore, the inner layer further protects the component or areas of the component in which the CMAS is prone to cause erosion damage rather than infiltration damage.

The hot section component typically comprises a high temperature superalloy article having a metallic bond coat. The bond coat typically is characterized as an overlay MCrAlY, although it may also be a diffusion aluminide, such as a simple aluminide (NiA1) or a platinum modified aluminide ((Ni,Pt)A1). The bond coat forms a thin, tightly adherent aluminum oxide layer, commonly known as a thermally grown oxide (TGO), which acts as an adhesion layer between the TBC and the bond coat. The bond coat also provides oxidation protection to the underlying substrate.

An advantage of various embodiments of the present invention is that it can be utilized to prevent CMAS damages to hot section engine components that also are exposed to the environmental contaminants found in flow path air.

Another advantage of various embodiments of the present invention is that it can be used to replace TBC coatings in current engines during retrofit or overhauls and it can be used on new engine designs and engine variants that can experience temperatures in excess of about 2800°F.

Still another advantage of the multilayer coating of various embodiments of the present invention is that it will not completely spall from the hot section component even after exposure to a large number of engine cycles and the accompanying temperature transients.

A further advantage of various embodiments of the present invention is the elimination of an expensive and complex inner layer. This allows for the use of a simple and lower density YSZ layer as an inner layer.

A further advantage of various embodiments of the present invention is that, in an erosive environment, the underlayer provides improved erosion resistance in lower temperature applications.

Yet advantage of various embodiments of the present invention is that it can be applied in different thicknesses to different components consistent with the mechanical operating conditions experienced by the components and still afford protection from CMAS infiltration to the components.

Other features and advantages of the present invention will be apparent from the following more detailed description of the preferred embodiment, taken in conjunction with the accompanying drawings which illustrate, by way of example, the principles of the invention, and in which:
Figure 1 depicts a cross-section of an embodiment of the present invention applied to a component substrate before being placed into service.
Figure 2 depicts a cross-section of a substrate coated with an embodiment of the present invention at 300 magnification after exposure to CMAS at 2350°F for one hour.
Figure 3 depicts a cross-section of a substrate coated with an embodiment of the present invention after exposure to CMAS at 2350°F for one hour, showing the location of microprobe sampling at six locations.

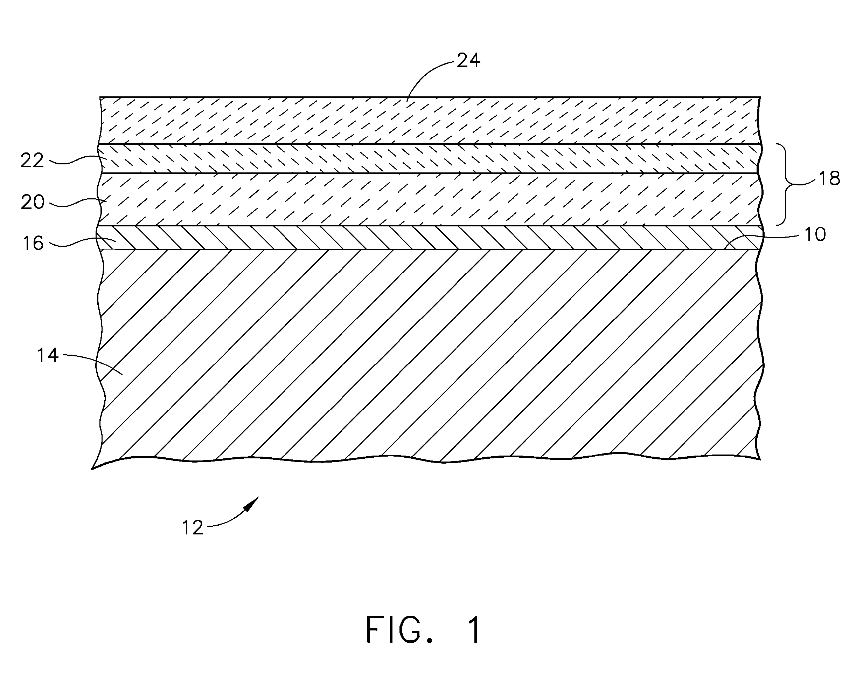

According to one aspect the present invention provides a multi-layer thermal barrier coating system that is resistant to CMAS infiltration for application to a substrate of hot section components of gas turbine engines that are exposed to environmental contaminants resulting in CMAS deposits during normal gas turbine operation. Referring now to Figure 1, the thermal barrier coating system typically is applied over the substrate surface 10 of a component 12. The substrate 14 typically is a superalloy material, which is coated with a bond coat 16. A zirconium-based coating 18 overlies the bond coat to provide the requisite CMAS infiltration resistance. It will be understood by those skilled in the art that coating 18 of embodiments of the present invention may include hafnium, partially or completely substituted for zirconium, and is used herein in that context. The zirconium-based coating 18 includes two layers, an inner layer 20 of partially stabilized zirconium oxide and an outer layer 22 overlying the inner layer 20 comprising a zirconium-based material doped with an effective amount of a lanthanum series based oxide, wherein the lanthanum series based oxides are selected from oxides of the group consisting of La, Ce, Pr, Nd, Pm, Sm, Eu, Gd, Tb, Dy, Ho, Er, Tm, Yb, Lu and combinations thereof. The outer layer typically is sufficient to provide the requisite CMAS infiltration resistance. However, if desired, an optional coating 24 of alumina may be applied over the outer layer of the zirconium-based coating.

The material comprising the substrate 14 is typically a superalloy material, either a nickel-based, iron-based or cobalt-based superalloy material or a superalloy that is a combination of nickel, iron or cobalt. Typical airfoil alloys include nickel-based superalloys. Nickel-based superalloy materials are selected because they retain excellent mechanical properties as they rotate at high speeds under high temperature operation. Shrouds and vanes also are comprised of nickel-based superalloy materials. These components are not subject to the high stresses resulting from high rotational speeds, but they still must retain their mechanical properties as they are exposed to high temperatures and thermal stresses. In addition, these nickel-based superalloys typically are characterized by excellent corrosion resistance and oxidation resistance. However, because the operating temperatures of gas turbines approach or exceed the melting temperature of the superalloy materials, these components are protected from overheating by active cooling systems. Various embodiments of the present invention provide a passive cooling system that is used in conjunction with an active cooling system.

The passive cooling system is typically a thermal barrier coating system. The thermal barrier coating system applied to the substrate surface 10 typically utilizes a bond coat 16. The bond coat 16 usually is a metallic or an intermetallic material applied directly to the substrate surface 10. This bond coat is added to improve the adhesion of the ceramic thermal barrier coating. The difference in properties between ceramic TBCs and superalloy substrates, including properties such as coefficient of thermal expansion (COE), toughness and fatigue strength etc. can be sufficiently great at elevated temperatures to cause a TBC to peel or spall from the substrate surface. Typical bond coats include MCrAlX alloys where M is an alloy selected from the group consisting of Fe, Ni, Co and combinations thereof and X is an element selected from the group of gamma prime formers, and solid solution strengtheners, consisting of, for example, Ta, Re or reactive elements, such as Y, Zr, Hf, Si, or grain boundary strengtheners consisting of B, and C and combinations thereof. Most typically, X is yttrium. Other materials used as bond coats are aluminides of Ni, Co, Pt, and combinations thereof. The bond coat also provides the additional advantage of providing additional oxidation and corrosion resistance.

In various embodiments of the present invention, overlying bond coat 16 is a zirconium-based coating 18 that provides the impedance to the transfer of heat directly to the material substrate. This zirconium-based coating comprises two layers, an outer layer 22 and an inner layer 20.

The outer layer 22 is a ceramic material comprising a zirconium-based material doped with an effective amount of a lanthanum series based oxide, wherein the lanthanum series based oxides are selected from oxides of the group consisting of La, Ce, Pr, Nd, Pm, Sm, Eu, Gd, Tb, Dy, Ho, Er, Tm, Lu and combinations thereof. How this layer reacts with CMAS is an important aspect of this invention. However, a layer having the composition of outer layer 22 when applied directly to a bond coat 16 spalls from the bond coat after a few engine cycles, and in some instances after just one engine cycle. The exact mechanism for spallation is not known. Without wishing to be bound by theory, it is believed to be due to lower fracture toughness of this layer, or at the interface between this thin layer and the TGO. The stresses at the interface are sufficiently high during engine cycling that the layer having the composition of the outer layer develops cracks and begins to spall.

To overcome the problem at the interface, it has been found that an inner layer 20 comprising a partially stabilized zirconia applied over bond coat 16 eliminates the problem of spalling. Partially stabilized zirconia includes zirconia stabilized with yttria from 2% to about 10% by weight. Unless specifically indicated otherwise, all percentages are provided as weight percentages. This stabilized zirconia is referred to as 2YSZ to 10YSZ. A preferred stabilized zirconia is 7YSZ that is a zirconia stabilized with 7w/o yttria. The outer layer 22 bonds to the inner layer 20, and the stresses at the interface between these layers during engine cycling are insufficient to cause spalling. Similarly the stresses at the interface between inner layer 20 and TGO on top of the bond coat 16 are also insufficient to result in spalling.

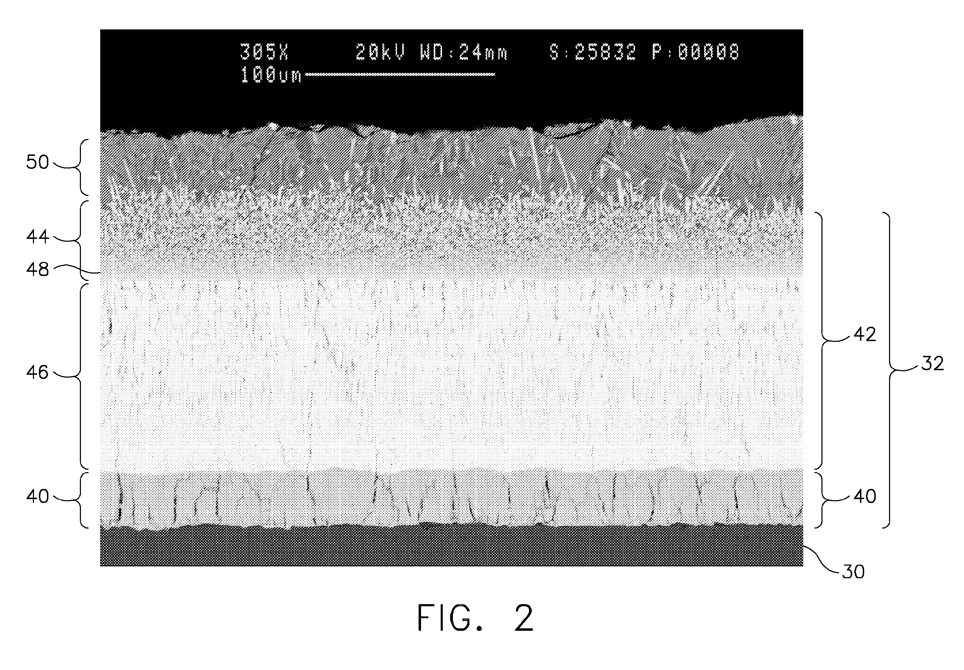

Reference is now made to Figure 2. Figure 2 depicts a coating having a composition within that contemplated by the present invention applied over an alumina substrate. With reference to Figure 1, this coating initially has an inner layer 20 comprising 7YSZ and an outer layer 22 comprising about 64.8%Nd₂O₃-35.2%ZrO₂ by weight. Figure 2 differs only in that it does not include a bond coat applied over a nickel-based substrate, but rather utilizes an alumina substrate to facilitate high temperature evaluation. Since Figure 2 solely illustrates the mechanism of various embodiments of the present invention in preventing CMAS infiltration, while the purpose of the bond coat over a nickel-based substrate is discussed above, this difference is not significant. Alumina substrate 30 is overlaid with an initial coating that falls within the composition of the present invention, as discussed above. Referring again to Figure 2, coating 32 includes an inner layer 40 and an originally-applied outer layer 42. After exposure to CMAS at elevated temperatures, the originally applied outer layer 42 includes a reaction zone 44, an unaffected zone 46 and a dense layer 48 between the reaction zone 44 and the unaffected zone 46. Overlying reaction zone 44 is a layer 50 of CMAS deposit. At the high temperature of engine operation, CMAS converts to a liquid. CMAS can undergo a change in state to a liquid at temperatures typically around 2240°F. A typical surface temperature of a gas turbine component with an applied TBC in an operating engine is about 2200°F and above. In understanding the interactions, reference is again made to Figure 1. As the CMAS contacts the surface (Figure 1), a reaction zone forms at 44 as the molten CMAS interacts with a portion of outer layer 22. This reaction zone 44 is characterized by a needle-like reaction product. As the reaction continues, a dense layer 48 forms in outer layer 22. However, this dense layer 48 prevents further infiltration of CMAS to the unaffected zone 46 below dense layer.

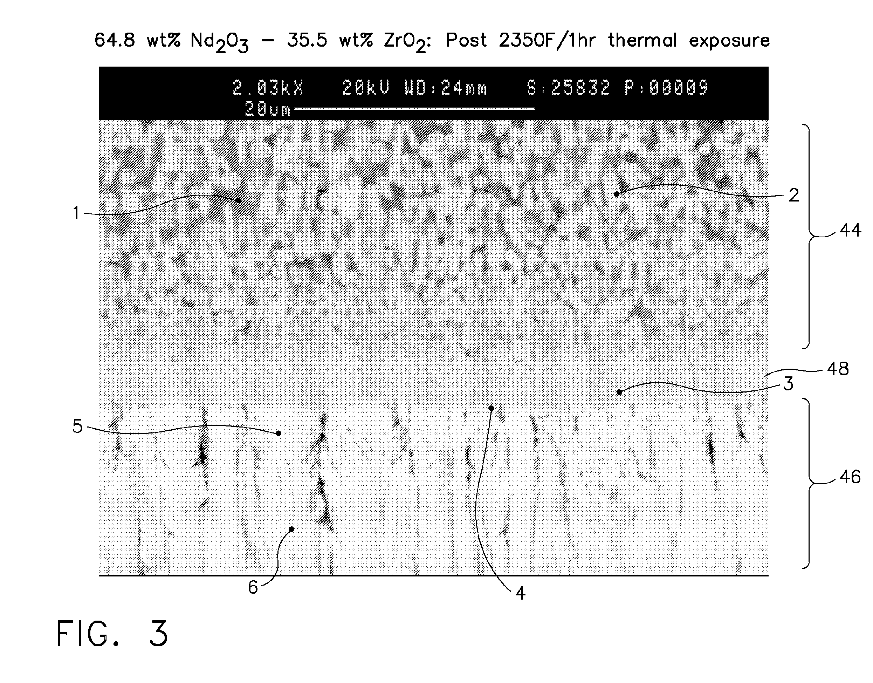

A microprobe analysis of affected areas of the coating disclose compositional differences, likely resulting from high temperature reactions. The reaction zone 44 includes not only Zr and Nd, but also A1, Si, Fe, Ca, Mg and a small amount of Ni. The results of microprobe readings from two different areas in the reaction zone, as shown in Figure 3 indicated as locations 1 and 2, are provided in Table 1. This coating was exposed to CMAS at a temperature of 2350°F for one hour. Oxide mole percentages are calculated for the various elements assuming that these elements form their respective oxides.

**TABLE 1**

| Element | Weight percent at Location 1 | Estimated mole percent at Location 1 | Weight percent at Location 2 | Estimated mole percent at Location 2 |
|---|---|---|---|---|
| ZrO₂ | 7.0 | 4.5 | 11.8 | 11.5 |
| Nd₂O₃ | 24.2 | 5.7 | 51.0 | 18.2 |
| CaO | 16.8 | 23.7 | 10.7 | 22.9 |
| MgO | 7.1 | 14.0 | 1.4 | 4.2 |
| Al₂O₃ | 12.5 | 9.7 | 1.6 | 1.9 |
| SiO₂ | 29.3 | 38.7 | 20.6 | 41.2 |
| Fe₂O₃ | 7.4 | 3.7 | -- | -- |

The dense layer 48 composition also was measured in two locations indicated as 3 and 4 in Figure 3. Its composition was different from reaction zone 44. This dense layer appears to form a barrier that is impenetrable for the CMAS. Differences in the weight percentage of Nd, Zr and other elements are likely the result of the initial concentration gradients in outer layer 42. Initial penetration and reaction of the coating with CMAS prior to or during the formation of dense layer 48 also probably contributes to compositional differences. Although there is some variance in the weight percentage of Zr and Nd in outer layer 42, due to multiple phase structures, it should be noted that the average weight percentage is very high relative to the amount of yttrium and its equivalents used to stabilize YSZ TBCs. The results of microprobe readings from two different locations, indicated as 3 and 4 in Figure 3, in the dense layer 48 are provided in Table 2.

**TABLE 2**

| Element | Weight percent at Location 3 | Estimated mole percent at Location 3 | Weight percent at Location 4 | Estimated mole percent at Location 4 |
|---|---|---|---|---|
| ZrO₂ | 13.5 | 16.2 | 16.7 | 28.6 |
| Nd₂O₃ | 59.6 | 26.2 | 65.1 | 26.2 |
| CaO | 6.6 | 17.4 | 1.5 | 5.6 |
| Al₂O₃ | -- | -- | 1.4 | 2.9 |
| SiO₂ | 16.4 | 40.3 | 4.4 | 15.4 |
| Fe₂O₃ | -- | -- | 5.1 | 6.7 |

The outer layer 46 below dense layer 48 is substantially unaffected by CMAS. Any variations in the weight percentage of Nd and Zr likely are the result of initial concentration differences in the outer layer resulting from deposition conditions due to, for example, differences in their vapor pressures. The results of microprobe readings from two different locations, shown as 5 and 6 in Figure 3, in the unreacted outer layer 46 are provided in Table 3.

**TABLE 3**

| Element | Weight percent at Location 5 | Estimated mole percent at Location 5 | Weight percent at Location 6 | Estimated mole percent at Location 6 |
|---|---|---|---|---|
| ZrO₂ | 14.2 | 31.2 | 26.7 | 49.9 |
| Nd₂O₃ | 85.8 | 68.8 | 73.3 | 50.1 |

The coating of various embodiments of the present invention can be used in dramatically different applications. The applications include static applications as well a rotating applications. Consideration must be given to the operations of the engine in each of the various applications to determine how the coating of various embodiments of the present invention is to be applied.

Shroud assemblies are examples of static applications. Shroud assemblies are designed to accommodate severe temperature excursions of the engine. During these severe temperature excursions, the rotating apparatus (i.e. the rotating blades) may wear into the shroud assemblies. The shroud assemblies are designed to accommodate this wear. The application of the coating of various embodiments of the present in invention to a shroud must accommodate this wear, since the rotating assemblies will wear into the shroud assembly and remove the outermost layers of the shroud assemblies. Since the coating of various embodiments of the present invention is applied to the shroud assemblies as its outermost layer, the coating must be applied to a sufficient thickness to accommodate this wear. It is anticipated that the coating of various embodiments of the present invention must be applied on a static assembly, such as a shroud assembly which will experience wear from moving parts to a total coating thickness of up to 80 mils (0.080 inches) and preferably 20-70 mils (0.020-0.070 inches). Furthermore, the wear must not be so great so as to remove all of outer layer 22, exposing inner layer 20. Thus, in this application, not only must the outer layer be thicker than the inner layer, but the initial ratio of the thickness of the outer layer 22 to the inner layer 20 must be high. The ratio of thickness of the outer layer to the inner layer ideally should be from about 0:15 to about 7:1. This inner ceramic coating is applied over a bond coat 16. The inner ceramic coating has a thickness of about from 5-40 mils (0.005-0.040 inches), and preferably from about 20-40 mils (0.002-0.040 inches). The preferred outer coating thickness for use with this inner coating thickness is about 20-70 mils (0.020-0.070 mils). Maintaining these ratios are key, because after initial wear-in, as the rotating apparatus contacts the stationary shrouds, sufficient material must remain in the outer layer to shield the coating from CMAS penetration. Thus, loss of coating material due to wear should be estimated when applying the layers. The thickness of the outer layer should meet the design intent for the application.

By contrast, turbine blades, which are rotating parts, do not require as thick of a coating. The coating of various embodiments of the present invention is applied to the airfoil section of a turbine blade. For the purposes of this discussion, the airfoil section of a turbine blade is that portion above the platform, or above the dovetail if the blade design does not include a platform. The airfoil section extends into the hot stream of gases resulting from combustion of fuel, also referred to as the gas flow path. The tip portion of the airfoil, which is opposed to the shroud, wears into the shroud during temperature excursions. As the overall thickness of coatings applied to blade tips is thin because of weight considerations, any coating applied to this tip portion will abrade away as a result of this contact. However, the adjacent areas of the tip extending downward from the tip portion toward the dovetail do not experience regular contact with other engine parts, but still require protection as they extend into the gas flow path. The coating applied to these surfaces can be significantly thinner than that applied to wear surfaces such as shrouds. The overall coating thickness in such applications can vary from about 4-15 mils (0.004-0.015 inches), and preferably is 4-10 mils (0.004-0.010 inches). The outer layer thickness can vary from about 0.5 mils to about 5 mils (0.0005-0.005 inches) and preferably is from 1-3 mils (0.001-0.003 inches). The ratio of thickness of the outer layer 22 to inner layer 20 is about 0.05:1 to about 0.5:1. This ceramic coating is applied over a bond coat having a thickness of from about 1-6 mils (0.001-0.006 inches). An optional alumina coat may be applied over the outer layer 22 of zirconium-based coating 18. The preferred thickness of this optional alumina coating 24 is about 0.2-1 mil (about 0.0002-0.001 inches).

Other hot section components that are not wear parts and are not rotating parts would be expected to have a coating with a thickness similar to that used for turbine blades. If erosion from hot gases is an anticipated problem, the thickness of the coating may be increased slightly beyond the upper thickness limit described above. For example, turbine vanes, which are stationary, would have a coating thickness very similar to that of the turbine blades.

The ceramic coating of various embodiments of the present invention is a two-layer zirconium-based coating that includes an effective amount in the outer layer of a lanthanum series based oxide, wherein the lanthanum series based oxides are selected from oxides of the group consisting of La, Ce, Pr, Nd, Pm, Sm, Eu, Gd, Tb, Dy, Ho, Er, Tm, Yb, Lu and combinations thereof. The inner layer is a partially stabilized YSZ wherein yttria is present in the amount of from 2-8%, and preferably is 7YSZ - 8YSZ. The ceramic coating of various embodiments of the present invention is the effective CMAS infiltration inhibitor in a coating system that includes a bond coat applied over a component substrate, wherein the component substrate preferably is a hot section gas turbine superalloy component. The ceramic coating is applied with the inner layer in contact with the bond coat and the outer layer facing the hot gas turbine environment. Optionally, a very thin topcoat of alumina may be applied over the outer layer for additional protection in applications in which wear is not a concern.

It is known that a substitution of lanthanum group oxide for yttria at a level sufficient for stabilization of zirconia, (about 2-10 weight percent yttria) in YSZ is not effective in preventing CMAS infiltration. Prior art attempts to solve the problem included either (1) a layer of alumina, or (2) a layer of tantalum oxide over an outer layer that included a lanthanum series oxide substituted for yttria in the outer zirconium-based layer or (3) alumina codeposited in an outer layer in which lanthanum series oxide is substituted for yttria in the outer layer. In this latter embodiment, because alumina is codeposited in amounts greater than 50%, the outer layer is no longer zirconium-based.

An effective amount of the lanthanum series oxide in outer layer 22 includes more than 20 mole percent of the lanthanum series oxide with the balance being zirconia. As previously noted, various embodiments of the present invention also contemplate hafnia (HfO₂) substituted partially or completely for zirconia, both in outer layer 22 and/or inner layer 20. Preferably the lanthanum series oxide is greater than 20 mole percent with the balance zirconia. Most preferably the lanthanum series oxide is greater than about 30 mole percent by weight. However, the lanthanum series oxide can comprise from greater than 20 mole percent to 60 mole percent of the outer layer, and the zirconium-based material comprises the balance, typically from about 40 to less than 80 mole percent. When the lanthanum series oxide is less than 50 mole percent, the zirconium-based material compromises a cubic zirconia phase. However, in the range of 50-60 mole percent lanthanum series oxide, more specifically, at greater than 20 mole percent lanthanum series oxide, the zirconium-based material can be present as pyrochlore, having the formula Zr₂X₂O₇ where X is a lanthanum series element. Various embodiments of the present invention also contemplate complex pyrochlores of (Hf₂Zr₂)X₂O₇. While any of the lanthanum series elements in oxide form should be effective, preferred lanthanum series elements, in oxide form includes Gd, La, Eu, Sm and Nd. The structure tested and depicted in Figure 2 nominally included 40 mole percent Nd₂O₃ and 60 mole percent ZrO₂, by mole in the ceramic material forming outer layer 22 of the ceramic coating and nominally 7YSZ in the ceramic material forming inner layer 20. Again, the difference between the measured composition in the outer layer 22 and the nominal composition is likely due to initial concentration gradients, phase structures and CMAS reactions.

It is also noted that an embodiment tested with a ceramic coating having an inner layer 20 of 7YSZ and an outer layer 22 of 52.6% Yb₂O₃-47.4% ZrO₂ by weight was ineffective in forming a dense layer that prevented infiltration of CMAS. CMAS infiltrated both the outer layer 22 and the inner layer 20. In an engine undergoing multiple engine excursions, such an infiltrated ceramic coating would spall. In this example, 52.6% Yb₂O₃ is an ineffective amount of oxide. It is expected that the effective amount of oxide will vary depending upon the lanthanum series oxide or combinations of oxides selected for inclusion in the outer layer. However, determining the effective amount for the lanthanum series oxide or combinations of oxides is within the skill of the artisan.

The ceramic coating of various embodiments of the present invention may be applied by any convenient method. The method of application is likely determined by the component to be coated. Shroud assemblies require thick coatings, but are relatively simple shapes. Methods such as thermal spray processes, used in depositing TBCs, can be used to apply both the inner layer 20 and the outer layer 22 to the bond coat. Thermal spray processes are inexpensive and relatively quick methods for applying a thick coating to a surface. These generally are line of sight processes. Thermal spray processes include air plasma spray, vacuum plasma spray, low pressure plasma spray, HVOF and other related methods. Thin coatings are required on structures such as blades. These require more precise controls. Physical vapor depositions are preferred for these applications. Electron beam methods (EB-PVD) are the most preferred method for applying thin coatings of the present invention to articles such as blades.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

### PARTS LIST

1-6 - locations of microprobe analysis
10 - substrate surface
12 - component
14 - substrate
16 - bond coat
18 - zirconium-based coating
20 - inner layer
22 - outer layer
24 - optional alumina coating
30 - alumina substrate
32 - coating
40 - inner layer
42 - originally-applied outer layer
44 - reaction zone
46 - unaffected zone
48 - dense layer between the reaction zone and the unaffected zone
50 - layer of CMAS deposit

## Claims

1. A CMAS infiltration-resistant thermal barrier coating system for application to a substrate, comprising:
a bond coat (16) applied to the substrate (14); and
a thermal barrier coating applied overlying the bond coat (16), the thermal barrier coating including an inner layer (20) consisting essentially of zirconium oxide partially stabilized with less than 20 weight percent yttria and an outer layer (22) applied overlying the inner layer comprising an oxide of a group IV metal selected from the group consisting of zirconia and hafnia, the oxide doped with an effective amount of a lanthanum series based oxide, wherein the lanthanum series based oxide is selected from oxides of the group consisting of La, Ce, Pr, Nd, Pm, Sm, Eu, Gd, Tb, Dy, Ho, Er, Tm, Yb, Lu and combinations thereof;
wherein the ratio of thickness of the outer layer (22) to the inner layer (20) is about 0.05:1 to about 7:1.

2. The CMAS infiltration-resistant thermal barrier coating system of claim 1 further including a coating of alumina (24) overlying the outer layer (22) of the thermal barrier coating, the outer layer (22).

3. The CMAS infiltration-resistant thermal barrier coating system of claim 1 or claim 2 further including a dense layer (48) located intermediate a CMAS reaction zone (44) and an unaffected zone (46).

4. The CMAS infiltration-resistant thermal barrier coating system of any preceding claim wherein the thermal barrier coating overlying the bond coat includes an outer layer that comprises zirconium oxide doped with the effective amount of a lanthanum series based oxide.

5. The CMAS infiltration-resistant thermal barrier coating system of claim 4 wherein the outer layer is doped with the effective amount of a lanthanum series oxide that includes pyrochlore phase zirconates, wherein pyrochlore phase zirconates comprise Zr₂X₂O₇, where X is an element selected from the group consisting of La, Ce, Pr, Nd, Pm, Sm, Eu, Gd, Tb, Dy, Ho, Er, Tm, Yb, Lu and combinations thereof.

6. The CMAS infiltration-resistant thermal barrier coating system of any preceding claim wherein the thermal barrier coating applied overlying the bond coat has a thickness of about 0.010- 0.080 inches with a ratio of outer layer thickness to inner layer thickness in the range of from about 0.15:1 1 to 7:1.

7. The CMAS infiltration-resistant thermal barrier coating system of claim 7 wherein the thickness of the inner layer is from about 0.005-0.040 inches.

8. The CMAS infiltration-resistant thermal barrier coating system of any preceding claim wherein the thermal barrier coating applied overlying the bond coat has a thickness of about 0.004-0.015 inches with a ratio of outer layer thickness to inner layer thickness in the range of from about 0.05:1 to 1:1.

9. The CMAS infiltration-resistant thermal coating system of any preceding claim
wherein the inner layer consists essentially of yttria stabilized zirconia (YSZ) having from 2-10% by weight yttria and the balance zirconia.

10. The CMAS infiltration-resistant thermal barrier coating system of any preceding claim wherein the effective amount of effective amount of a lanthanum series based oxide in the outer layer includes in mole percent greater than 20 up to 70 percent of an oxide selected from the group consisting of La, Ce, Pr, Nd, Pm, Sm, Eu, Gd, Tb, Dy, Ho, Er, Tm, Yb, Lu and combinations thereof.
